Europäisches Patentamt

(19) European Patent Office

Office européen des brevets

(11) Publication number : **0 473 412 A1**

(12) **EUROPEAN PATENT APPLICATION**

(21) Application number : **91307878.8**

(22) Date of filing : **28.08.91**

(51) Int. Cl.⁵ : **H04N 5/92, G11B 20/14**

(30) Priority : **31.08.90 JP 231703/90**
**26.09.90 JP 258020/90**

(43) Date of publication of application :
**04.03.92 Bulletin 92/10**

(84) Designated Contracting States :
**DE FR GB NL**

(71) Applicant : **MATSUSHITA ELECTRIC**
**INDUSTRIAL CO., LTD.**
**1006, Oaza Kadoma**
**Kadoma-shi, Osaka-fu, 571 (JP)**

(72) Inventor : **Iketani, Akira**
**2-4-28, Nishitsutsumihonndourihigashi**
**Higashiosaka-shi, Osaka-fu 577 (JP)**

(74) Representative : **Crawford, Andrew Birkby et al**
**A.A. THORNTON & CO. Northumberland**
**House 303-306 High Holborn**
**London WC1V 7LE (GB)**

(54) **Digital signal recording method.**

(57)    Data word of 8 bits is code-transformed into a code word of 12 bits, for an 8/12 code having such a performance suitable for high density recording as d = 2 and k = 10, two kinds of synchronous pattern which are never appeared in a data can be respectively provided for the video and audio uses while keeping the limitation to d and k. Accordingly, decision error between the video data and audio data resulting from reproducing error can be remarkably decreased, leading to an improvement in error probability and yet it is realizable with an extremely practical circuit structure.

    In addition, a pilot signal can be generated digitally with an extremely simple circuit, being suitable for home-use DVTR or the like necessary to use a stable pilot signal. As a result, the error rate of a super high density recording apparatus such as, for example, DVTR can be remarkably decreased, thus its practical effects being very large.

EP 0 473 412 A1

This invention relates to a digital signal recording apparatus to be used suitably for high density recording of digital signals of digital video tape recorder (VTR) or the like.

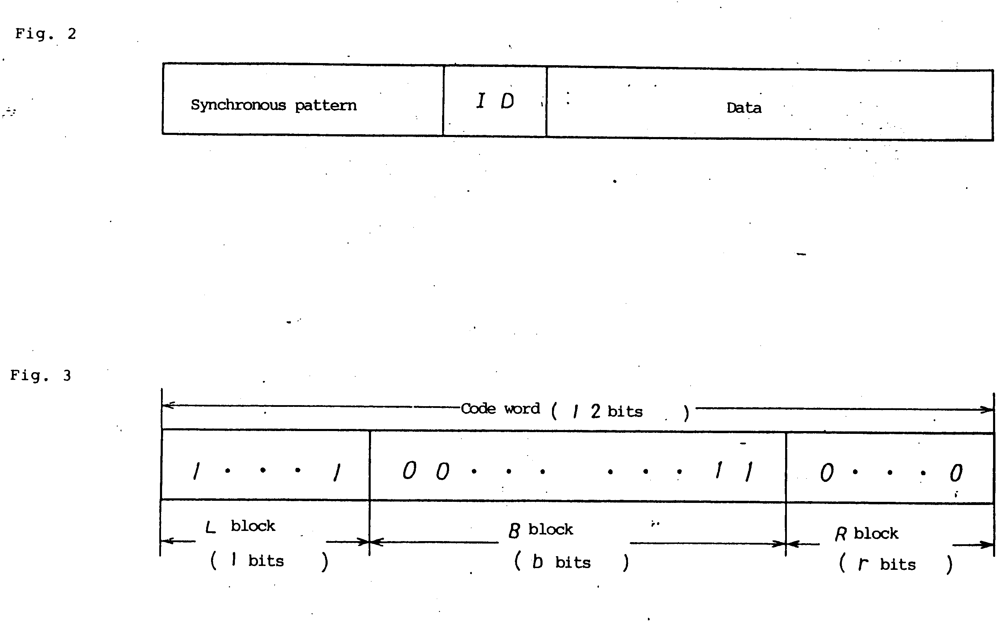

Conventionally commercially available digital VTRs (hereinafter abbreviated as DVTR) are exclusively used for the broadcasting purpose, in which the recording is performed in the block form as shown in Fig. 2. That is, the recording block consists of a synchronous pattern showing the top block thereof, an ID showing the information of a recording data and the recording data. When reproducing, the synchronous pattern is detected to identify the top block thereof, and then, the ID or data are restored.

With the conventionally commercially available DVTR for the broadcasting use, the synchronous pattern for the video data and that for the audio data are identical. The audio data and video data are added as a part of the ID block in Fig. 2 with respectively special identification codes mutually identifiable for each recording block in which the data are contained and then, recorded. On the other hand, when the reproduction is to be carried out, the reproducing data is identified if it is video or audio in response to the identification code thus added thereby switching the following processings in accordance with the result therefrom.

As shown above, with the DVTR, when reproducing, the video and audio data have different processings depending on the identification codes in respective recording blocks. As a result, if the identification code is erred, such a case may be happened that the video data is processed as an audio data and vice versa. It typically exemplifies that an extremely small error results in an extremely large error, arising a critical problem on a practical basis.

Since the conventionally commercially available DVTRs are for the broadcasting use which comes expensive, a lot of circuit means are provided in order to prevent the identification code to be erred thereby overcoming such a problem as shown above. In this case, however, referring to the DVTRs for the home use which will be commercially available in the future, large-scale circuit means cannot be packaged on a cost basis as a measure to prevent the identification code to be erred as for the broadcasting use. Accordingly, to find a method comparatively easily capable of largely reducing the error generation of identification code is a critical theme for realization of home-use DVTR.

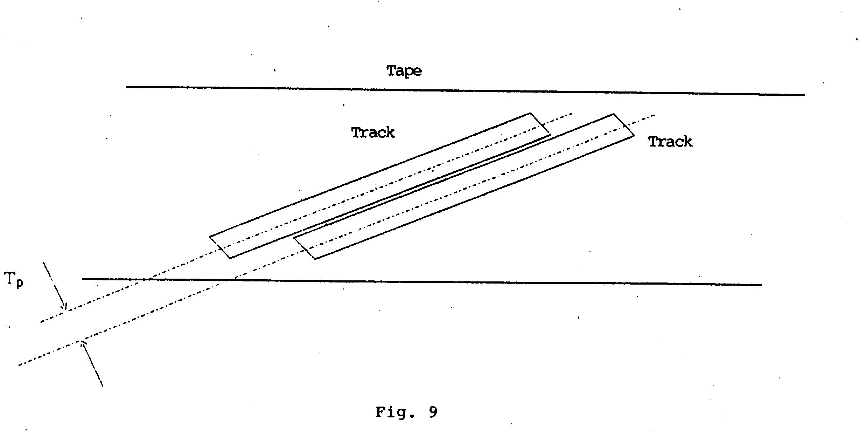

On the other hand, at present, in the magnetic recording field, the development of narrow tracking technology is in progress in order to improve the recording density. For example, with the home-use VTR now on sale, signals are recorded obliquely on a tape as shown in Fig. 9. The locus thus formed on the tape is called track, the effective width of which being called track pitch (TP).

At present, the track pitch is less than 30 $\mu$ m, and it is not impedient if the track is handled substantially linearly due to the fact that the track may be curved resulting from a lack of accuracy in the mechanical system and a reduction amount of actual track pitch ranges from 2 to 3 $\mu$m. This means that the effect of the track curvature can be ignored.

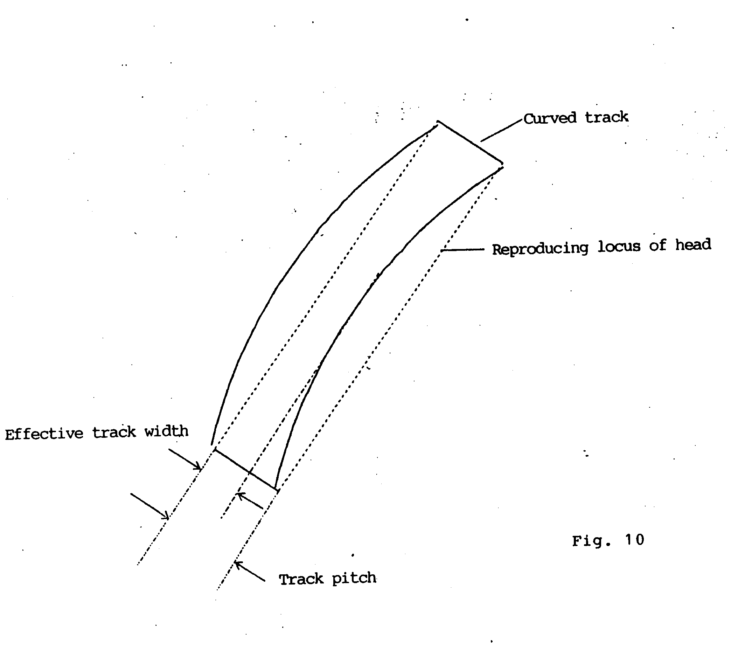

However, in case of setting the track pitch to be less than 10 $\mu$m, for example, to be 5 $\mu$m in order to improve the recording density, such a problem as shown in Fig. 10 will be arisen. Namely, such a track curvature as mentioned above narrows the effective track width up to about half of the actual one. Reduction of the track pitch causes the signal power to be lowered and the reliability of the signal to be decreased, so that under the state that the effective track width is only the half of the actual track pitch, the reliability of signal will be remarkably decreased.

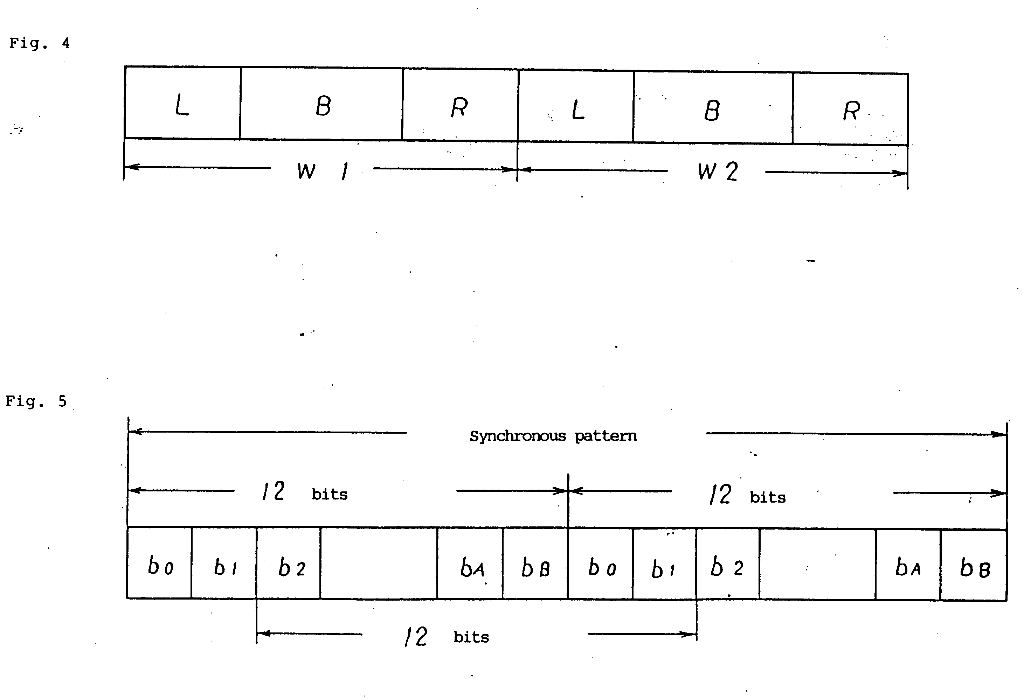

For the reasons as shown above, in case of narrow track recording, a function to control the height of a head so as to follow the head to the track curvature is additionally provided. This function extracts a special frequency (hereinafter called pilot) for tracking which is recorded on the track superposed on the signal from the reproducing signal by providing the head to the top end of a piezoelectric element as shown in Fig. 4 and controls the voltage to be applied to the piezoelectric element in response to the level of the pilot thus extracted. As a result, the head can accurately trace the track curvature, so that the effective track width can be substantially equal to the actual track pitch.

However, in case of superposing a pilot on a signal, it is analogically recorded superposingly upon the signal conventionally. In this case, the pilot is equivalent to a noise from the stand point of signal. As a result, if the recording level of the pilot is made excessively large in order to make sure of accurately extracting the pilot, a lot of noises are recorded superposingly upon the signal, resulting in an increase in error.

On the other hand, if the recording level thereof is excessively small, the pilot cannot be extracted correctly. In addition, even if there exists a suitable recording level of the pilot, it will be varied depending on the VTR deck to be used for recording. Accordingly, there arises such a problem that the deck must unavoidably take a lot of time for adjustment in the manufacturing process thereof.

An object of this invention is to provide a new method of solving the problems arisen in the prior art as shown above. Namely, when a synchronous pattern is to be inserted into a recording block consisting of a plurality of information signals as a top pattern, the synchronous pattern is selected according to the kind of the plural information signals, so that a digital signal recording apparatus capable of correctly identifying the kind of the reproduced information signal can be provided.

For example, a digital signal recording apparatus of this invention uses different synchronous patterns for the video and audio data, respectively. In this case, the identification of the two kinds of synchronous patterns and the identification code being conventionally used are employed in combination, so that the discrimination between the video data and audio data can be correctly performed. Also, using the fact that the synchronous pattern is larger in the bit number than the identification code in general and such a probability that the synchronous pattern for the audio data is erroneously identified as the synchronous pattern for the video data is extremely small, the video data and audio data can be correctly identified only by discrimination between these two synchronous patterns.

Thus, this invention makes possible that by selecting the synchronous pattern according to the kind of data, the discrimination therebetween can be achieved by far smaller in error than would be obtained when using only the identification code for discriminating the kind of data simply as in the prior art.

Another object of this invention is to provide a novel digital signal recording apparatus which is capable of completely eliminating the disadvantages caused by the conventional analog pilot signal, and in which the digital recording sequence itself generates a large level of spectrum only at the pilot frequency. Such recording sequence can be obtained by inserting the binary value 1 continuing one bit or more and the binary value 0 continuing one bit ore more alternately at a predetermined interval into an original recording sequence.

That is, 1 and 0 are inserted alternately and periodically into the original recording sequence. As a result, the newly obtained recording sequence has 1 and 0 appeared alternately and periodically. Such an alternate appearance of 1 and 0 generates a sharp spectrum at the frequency of the inverse number of this period. Accordingly, the desired pilot can be obtained by setting the predetermined interval suitably. In addition, the bit rate of the pilot frequency is selected such as to be about 1/50 of the recording bit rate in many cases, and the insertion of 1 and 0 is as small as 1 bit per 50 bits of the original recording sequence, so that the bit rate of the newly obtained recording sequence can be increased by only several percentages higher than that of the original recording sequence, thus being almost no problem on a practical basis.

Further in addition, since the bit pattern showing such frequency spectrum is inserted simply between the recording sequence, this insertion does not give any disturbance to the recording sequence and the pilot level is extremely stable, which means that the problems arisen with the conventional analog pilot are completely solved by this invention.

Fig. 1 is a block diagram of a code transform apparatus according to a first embodiment of this invention.

Fig. 2 is an explanatory diagram of a recording block.

Fig. 3 is a structural diagram of a code word.

Fig. 4 is a diagram for explaining mutual connection of code words.

Fig. 5 is a structural diagram of a synchronous pattern.

Fig. 6 is a circuit diagram of a synchronous detection circuit.

Fig. 7 is a block diagram of a decoding circuit.

Fig. 8 is a block diagram of a second embodiment of this invention.

Fig. 9 is a track arrangement diagram of commercially available home-use VTR.

Fig. 10 is a diagram for explaining a reduction in effective track width due to track curving.

5. Description of Preferred Embodiments

Embodiment 1:

In Embodiment 1, 8/12 code which is suitable for high density recording will be explained below as an example. The 8/12 code is such a code that the data word of 8 bits is transformed into a code word of 12 bits and the continuous bit number of the same binary value obtained by connecting the code words of 12 bits thus transformed adjacently to each other according to a specific rule is limited to the minimum 2 (=d) and the maximum 10 (=k).

Detailed explanation will be made on the 8/12 code below. In this case, however, for the convenience of explanation, in order to classify the code words to be used in the 8/12 code, the parameters representing the features of a code word as shown in Fig. 3 are defined as follows;

L block : Start block of a code word of 1 bits having the same binary value TB continued.

R block : End block of a code word of r bits having the same binary value LB continued.

B block : Intermediate block of a code word of b (=12-l-r) bits

The code words to be used for the 8/12 code are limited to those satisfying the following conditions;

( I ) $1 \leqq 1 \leqq 9, 1 \leqq r \leqq 9$

In ( I ) B block, the limitations to d and k are completely satisfied.

The symbol ( I ) means that in the B block, 0 and 1 are alternately continued ranging in bit from 2 to 10 (excepting 0). In addition, the following parameters F and E are introduced in connection with I and r, respectively;

$F = 0$ ( $I = 1$ )
$F = 1$ ($2 \leqq I \leqq 5$)
$F = 2$ ($6 \leqq I \leqq 9$)
$E = 0$ ( $r = 1$ )
$E = 1$ ($2 \leqq r \leqq 5$)
$E = 2$ ($6 \leqq r \leqq 9$)

Based on the four parameters (TB, F, E and LB) thus defined, the code words are mutually controlled, which means that referring to the connection of the first code word W1 and the second code word W2 shown in Fig. 4, the limitations to the minimum d and maximum k are to be satisfied even at, , the connection part of the R block of the code word W1 and the L block of the code word W2. Hereinafter, the rule relate to the mutual connection of code words is called connection rule.

Table 1 shows a combinational rule of code words in this embodiment, which is defined based on the four parameters (TB, F, E and LB). In Table 1, CW-No. indicates a combination number of code words and an identification number of the code words to be combined, and to the code words making one combination are corresponded the same data word.

In Table 1, TB, F, E and LB are parameters of a code word. A code word represented by these parameters will be exemplified. Then, the combination rule of code words in Table 1 will be explained in detail. In this case, the code word obtained by replacing 1 and 0 in the code word A respectively with 0 and 1 is called inverse pattern of the code word A and expressed as A′.

(1) The code word CW (F, E, 1) of $F \neq 1$, $E \neq 1$, TB = 1 and LB = 1 is combined with the code word CW (F, E, 1)′ as its inverse pattern and the code word CW (F, E, 0) which is equal in F, E and TB to the code word CW (F, E, 1) and LB = 0 is combined with the code word CW (F, E, 0)′ as its inverse pattern.
(CW-No. = 1, 4, 13)

(2) The code word CW (F, 1, X) of $F \neq 1$, E = 1, TB = 1 is combined with the code word CW (F, 1, X)′ as its inverse pattern. In this case, however, X indicates either 0 or 1.
(CW-No. = 2, 3, 14, 15)

(3) The code word CW (1, E, 1) of F = 1, $E \neq 1$, TB = 1 and LB = 1 is combined with the code word CW (1, E, 0) which is equal in F, E and TB to the code word CW (1, E, 1) and LB = 0.
(CW-No. = 5, 6, 11, 12)

(4) The code word CW (1, 1, X) of F = 1 and E = 1 is not combined with the code word CW (1, 1, X)′ but corresponded to the data word independently.
(CW-No. = 7, 8, 9, 10)

When the code word are mutually combined through the combination rules (1) to (4) as shown above, as shown in Table 2, the limitation to d and k can be surely satisfied. Among the code words of 12 bits, the number of the combinations of code words obtained resulting from performing the combinations according to the paragraphs (1) to (4) only for the code words satisfying the conditions shown in the parentheses is 264 as shown in Fig. 3. In addition, DP shown in Table 3 indicates the absolute value of the difference between the number of 1 and that of 0 in a code word (called disparity).

From the fact that the number of data words of 8 bits is 256, RLL code of 12 bits satisfying the limitations such as d = 2 and k = 10 of this invention can completely code-transform the data word of 8 bits. In a general digital recording, a synchronous pattern is added in order to perform the block synchronization by block with a plurality of data as one block. As the synchronous pattern in this case, it is preferable to select a special pattern never appeared in general data in order to correctly detect the synchronous pattern.

In Embodiment 1, the code word to be corresponded to the data word are limited to the code words ( 265 words ) with a DP value below 6 in Tables 3.1 to 3.6 and the synchronous pattern to be used is that the same code words (F = 1, E = 1) with a DP value of 8 are arranged in a 2-word series manner (for example, code word No. 256 in Table 3.7). As shown in Fig. 5, the bit (bi ; i = 1-B) constituting a code word with a DP value of 8 is surely contained even in any of continuous 12 bits (B12) of a synchronous pattern of 24 bits, so that the DP value of the B12 becomes 8. On the other hand, the code word of 12 bits of at least one word is contained in the bit string of 24 bits. As a result, in case of the bit string obtained by mutually connecting the code words with a DP value below 6 corresponding to the data word, optionally continuous 24 bits surely contain as a part the continuous 12 bits with a DP value below 6. Therefore, this synchronous pattern is never appeared in the bit string obtained by mutually connecting the code words corresponding to the data word.

As shown above, by defining the code word corresponding to the data word and the data word to be used as the synchronous pattern, correct block synchronization can be provided while keeping the limitations of d = 2 and k = 10. Similarly, as the synchronous patter, such a pattern that the code words (F = 1, E = 1) with a DP value of -8 are arranged in a 2-word series manner is used (for example, code word No. 257 in Table 3.7). That is, the 8/12 code has at least two words as a pattern suitable for the synchronous pattern never appeared in the data.

Here, as the synchronous pattern, the following two kinds are selected;

For video use : 111110011111111110011111

For audio use : 000001100000000001100000

The two synchronous patterns are in complementary relation with each other, so that in order to completely err the synchronous patterns of the video and audio use, it is required to cause 24 bits to be erred. However, the bit error rate under the normal reproducing state is extremely as small as $1 \times 10^{-4}$ or less, at largest $1 \times 10^{-3}$ or less, which means that such a probability that the synchronous patterns of two kinds are entirely erred can be ignored.

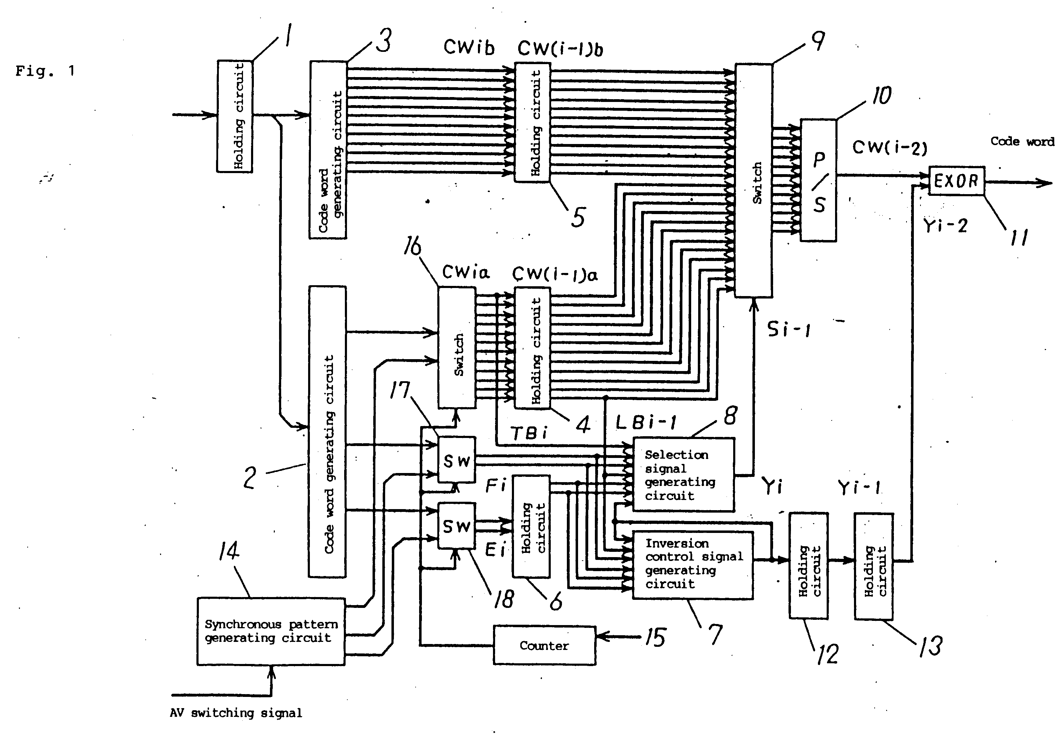

Next, the operation of the code transforming apparatus of Embodiment 1 will be explained below by referring to Fig. 1. In Fig. 1, a holding circuit 1 successively holds the data words of 8 bits which are periodically supplied. The output from the holding circuit 1 is delivered to a code word generating circuit 2 and a code word generating circuit 3. In the code word generating circuit 2, the "code word" of E = 1 and the "code word 1" of E ≠ 1 in Table 3, and the parameters F and E of the L and R blocks of these code word are generated.

In this case, the code word appeared in the output of the code word generating circuit 2 is expressed as $CW_{ia}$. On the other hand, in the code word generating circuit 3, the "code word 2" of E ≠ 1 in Table 3 is generated. In this case, the code word appeared in the output of the code word generating circuit 3 is expressed as $CW_{ib}$. In addition, No. in Table 3 corresponds to the data word appeared in the output of the holding circuit 1. For example, if the value of the data word is 154, the code word 100011100111 of No. 154 in Table 3 is appeared in the code word generating circuit 2.

A holding circuit 4 holds the output of the code word generating circuit 2, a holding circuit 5 holds the output of the code word generating circuit 3, and a holding circuit 6 holds the values of the parameters E and LB for the R block of the just before code word $CW_{(i-1)a}$. Also, the value of LB may be a value of the final bit of the code word $CW_{(i-1)a}$. In addition, an inversion control signal generating circuit 7 generates a value Y to control the code word $CW_{ia}$ to make it of the inverse pattern or not (Y = 1 ; inverse pattern) in accordance with Table 2.

In this case, the values of TB, F, LB and E for the code word $CW_{ia}$ are expressed as $TB_i$, $F_i$, $LB_i$, and $E_i$, respectively. Also, the values of TB, F, LB and E of the just before code word $CW_{(i-1)a}$ are expressed as $TB_{i-1}$, $F_{i-1}$, $LB_{i-1}$ and $E_{i-1}$, respectively. Thus, if the inversion information for the just before code word $CW_{(i-1)a}$ is expressed as $Y_{i-1}$, the inversion information $Y_i$ for the code word $CW_{ia}$ becomes 1 when it satisfied any of the following three conditions;

(Y.1) $LBX_{i-1} = 0$, $F_i = 0$

(Y.2) $LBX_{i-1} = 0$, $E_{i-1} = 0$ and $F_i = 2$

(Y.3) $LBX_{i-1} = 1$, $E_{i-1} \neq 0$ and $F_i = 2$,

where $LBX_{i-1}$ can be obtained by the exclusive OR $LB_{i-1}c$ and $Y_{i-1}$.

On the other hand, a selection signal generating circuit 8 generates selection signal S. A switch 9 is switched in response to the selection signal S thereby to select either the code word from the code word generating circuit 2 or that from the code word generating circuit 3. The selection signal S becomes 1 only when any one of the following two conditions is satisfied, and only in this case, the code word from the code word generating circuit 3 is selected.

(S.1) $E_{i-1} = 0$, $LBX_{i-1} \neq TB_i$, and $F_i = 1$

(S.2) $E_{i-1} = 2$, $LBX_{i-1} = TB_i$, and $F_i = 1$

As seen from the conditions (Y.1) to (Y.3) and (S.1) and (S.2), the inversion control signal generating circuit 7 and the selection signal generating circuit 8 each can be realized by using a simple logic circuit. Next, a parallel / serial converter 10 converts the code word of 12-bit paralleled appeared in the output of the switch 9 into a serial data. An EXOR gate 11 inverts the serial code word in response to the output of the parallel / serial converter 10 and the inversion control signal Y from the inversion control signal generating circuit 7 to output, or does not invert it to directly output.

Holding circuits 12 and 13 serve to time-control between the code word output form the parallel / serial converter 10 and the inversion control signal output for this code word. On one hand, in the video block, a synchronous pattern generating circuit 14 generates a two-word (24 bits) synchronous pattern of 111110011111111110011111 and the parameters of F = 1 and E = 1 corresponding to this synchronous pattern in response to the AV switching signal. On the other hand, in the audio block, it generates a two-word (24 bits) synchronous pattern 000001100000000001100000 and the parameters of F = 1 and E = 1 corresponding to this synchronous pattern.

Of these signals thus generated, in response to the synchronous pattern block signal from a counter 15, the synchronous pattern is sent to a switch 16, the parameter of F = 1 is sent to a switch 17 and the parameter of E = 1 is sent to a switch 18. The switches 16, 17 and 18 each selects and outputs the corresponding signal from the synchronous pattern generating circuit 14 only while the synchronous pattern block signal from the counter 15 is being ON. As a result, the synchronous patterns are processed entirely similarly to the code word of F = 1 and E = 1, which means that the inversion of the synchronous pattern and / or the infringement of the limitation rule to d and k before and after the synchronous pattern does not occur.

As shown above, with the circuit structure as shown in Fig. 1, the data word of 8 bits is transformed into a code word of 12 bits. In the 8/12 code in which the continuous bit number of the same binary values in the bit string obtained by mutually connecting the transformed code words of 12 bits is limited as to range from 2 to 10, two kinds of synchronous pattern which are never appeared in the data can be generated for the video and audio uses.

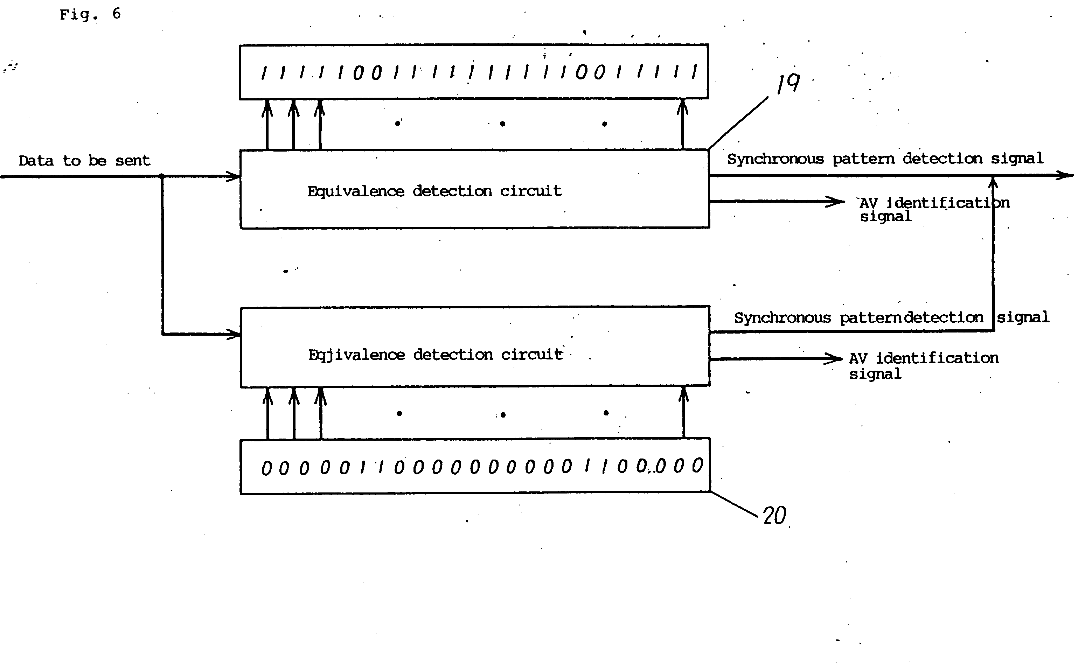

On the other hand, the identification of the synchronous pattern for the video or audio use can be easily realized by using two kinds of equivalence circuit as shown in Fig. 6. That is, the two equivalence circuits are an equivalence detection circuit 19 for detecting the coincidence of the inputted data with the synchronous pattern 111110011111111110011111 for the video use and an equivalence detection circuit 20 for detecting the coincidence of the inputted data with the synchronous pattern 000001100000000001100000 for the audio use.

The equivalence detection circuit 19 generates an AV identification signal (=0) showing that the equivalence signal is coincided with the synchronous pattern for the video use and the equivalence detection circuit 20 generates an AV identification signal (=1) showing that it is coincided with that for the audio use. As a result, the synchronous pattern detection signal and the AV identification signal can be simultaneously obtained. Thereafter, for example, by using in combination with a conventional identification code, the identification error probability to be occurred between the video and audio blocks can be further reduced.

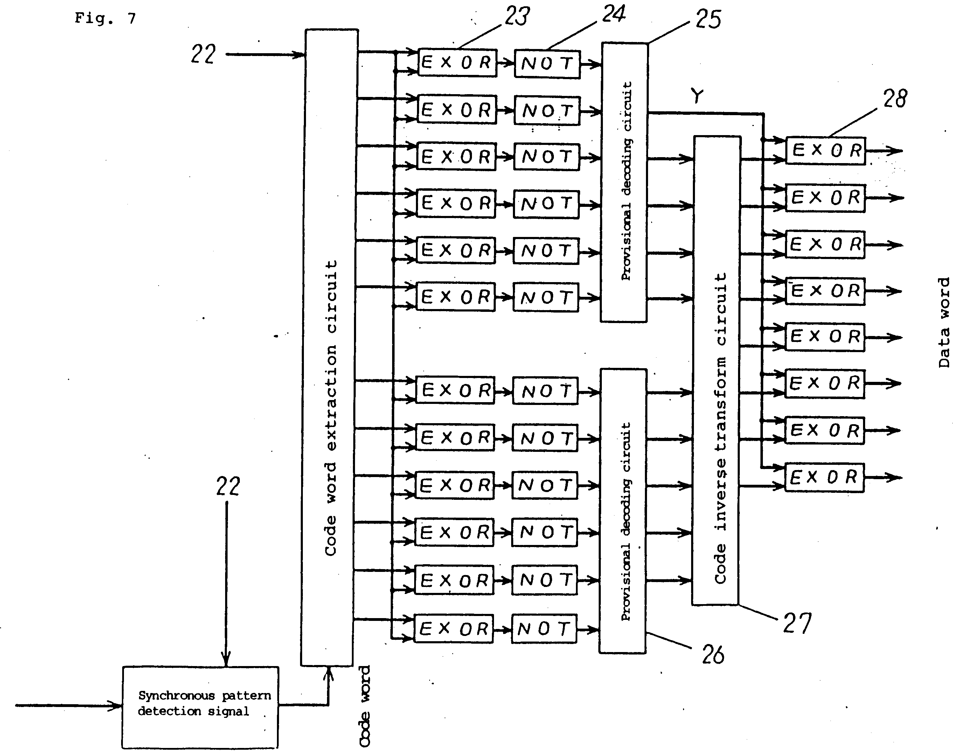

Next, the decoding circuit for decoding the data word of 8 bits from the code word of 12 bits in response to the synchronous pattern detection signal detected as shown in Fig. 6 will be explained below. In Fig. 7, a code word extraction signal generating circuit 22 generates a signal showing the word boundary of code words from the reproduced bit string in response to the synchronous pattern detection signal. A code word extraction circuit 23 extracts a code word of 12 bits from the reproduced bit string in response to the output form the code word extraction signal generating circuit 22.

Then, the code word of 12 bits is decoded into a data word of 8 bits. With the conventional decoding method, a code word of 12 bits is decoded directly into a data word of 8 bits. If it is performed using ROM (Read Only Memory), the necessary capacity for the ROM is $2^{12} \times 8 = 32$ kilo-bit. On the other hand, the capacity of ROM necessary for the decoding circuit of this embodiment is as small as 4 kilo-bit. The decoding procedures of 8/12 code and the decoding circuit to be used for this purpose will be explained.

The decoding method of the 8/12 code features as follows:

(1) The top bit of any code word to be decoded must be 1.

(2) The method does not decode the code word itself as a subject to be decoded, but decodes it using identification codes of bit patterns obtained by dividing the code word.

Next, the fact that the decoding can be correctly achieved using the method featured as above will be cleared below. As explained above, in case of the code word of F ≠ 1 of this embodiment, the code word W2 beginning with 1 and the inverse pattern W2' thereof are corresponded to the same data word. As a result, if it is known that the code word to be decoded is of F ≠ 1, it is not required to decode it after identifying whether it is the code word W2 beginning with 1 or the inverse pattern W2' thereof. Accordingly, in case of the code word of F ≠ 1, the code word W2 and its inverse pattern W2' may be corresponding to the same identification code.

On the other hand, in case of the code word of F = 1, the code word W2 whose top bit TB is 1 and the inverse pattern W2' of the code word W2 whose top bit TB is 0 are corresponded to different data word from each other. As a result, when the data word D corresponding to the code word W2 and the data word D' corresponding to the code word W2' are to be optionally selected, it is required to output an identification code which can discriminate the code word W2 and its inverse pattern W2'.

However, in case that the data word D corresponding to the code word W2 and the data word D' corresponding to the code word W2' are complementary, that is, in case that the data word D' is obtained by inverting all bits 1 of the data word D into 0 and all bits 0 thereof into 1, the identification code for the code word W2 and that for code word W2' can be equal to each other. The reason of this will be shown below. The identification code for the code word W2 is expressed as ID and the data word output for the identification code ID is expressed as D.

In this case, since the identification code for the code word W2' is ID as well, the data word output therefor becomes D. As a result, if the code word W2 is detected as to be F = 1 and TB = 0, all bits 1 of the data word D outputted from the decoding circuit are inverted into 0 and all bits 0 thereof are inverted into 1. By this way, the data word D′ for the final code word W2′ can be obtained.

The decoding circuit structured based on the decoding method shown above will be explained by referring to Fig. 7. In Fig. 7, 12 exclusive OR (EXOR) gates 32 and 12 NOT gates 24 are for transforming a code word of 12 bits to be decoded into a code word surely beginning with 1. As an example, suppose that the code word to be decoded is such as 100111001100. The top bit TB thereof is 1, and the output of each of the NOT gate 24 becomes 100111001100 because the EXOR gate 32 serves to negate.

Contrary to this, supposing that the code word to be decoded is such as 011000110011, the top bit TB thereof is 0, and the EXOR gate 23 each directly outputs the input thereof. As a result, a code word of 100111001100 can be obtained as an output of the NOT gate 23. A provisional decoding circuit 25 generates an identification code for upper 6 bits of a code word surely beginning with 1 obtained from the output of the NOT gate 23. As seen from Table 3, upper 6 bits of a code word surely beginning with 1 exist 13 kinds as shown in Table 4.

In this case, the identification code (ID) for the upper 6 bits can be expressed by 4 bits. Furthermore, the provisional decoding circuit 25 also outputs the inversion control signal Y becoming 1 only when the code word to be decoded is F = 1 and TB = 0. The inversion control signal Y can be realized with a simple logic circuit. In addition, a provisional decoding circuit 26 in Fig. 7 generates an identification code for lower 6 bits of a code word surely beginning with 1 obtained from the output of the NOT gate 24. As seen from Table 3, lower 6 bits of a code word surely beginning with 1 exist 26 kinds as shown in Table 5.

Accordingly, the identification code (ID) for the lower 6 bits thereof can be expressed by 5 bits. The identification codes of 9 bits thus obtained in Tables 6.1 and 6.2 can be corresponded without duplication to the code words beginning with 1 in Table 3. A code inverse transform circuit 27 in Fig. 7 is to realize Table 6 and outputs a data word for the identification code of 9 bits.

Each of the eight EXOR gates 28 performs the exclusive OR operation of the inversion control signal Y and each of 8 bits from the inverse transform circuit 27. As explained above, for the code word of F = 1, the code word beginning with 1 and the data word corresponding to the inverse pattern thereof are also complementary. As a result, for the code word of F = 1 and TB = 0, Y = 1 is resulted, so that only in this case, the output of each of the EXOR gates 28 becomes a value obtained by inverting each of the outputs of the inverse transform circuit 27, thus being capable of providing correct decode data.

As explained above, the decoding circuit according to this embodiment of this invention does not use the code word itself but uses the identification code corresponding to a bit pattern obtained by dividing the code word, thereby decreasing the capacity of ROM necessary for decoding to 1/8. Concretely, the provisional decoding circuits 25 and 26 each can be easily realized with a comparatively simple logic circuit. Accordingly, the capacity of ROM necessary for decoding is address 9 bits, 8 bits output : $2^9$ x 8 = 4 kilo-bit. Also, in this embodiment, the 8/12 code transformation largely effective in high density recording is exemplified, but not limited thereto, being effective for other recording codes.

Embodiment 2:

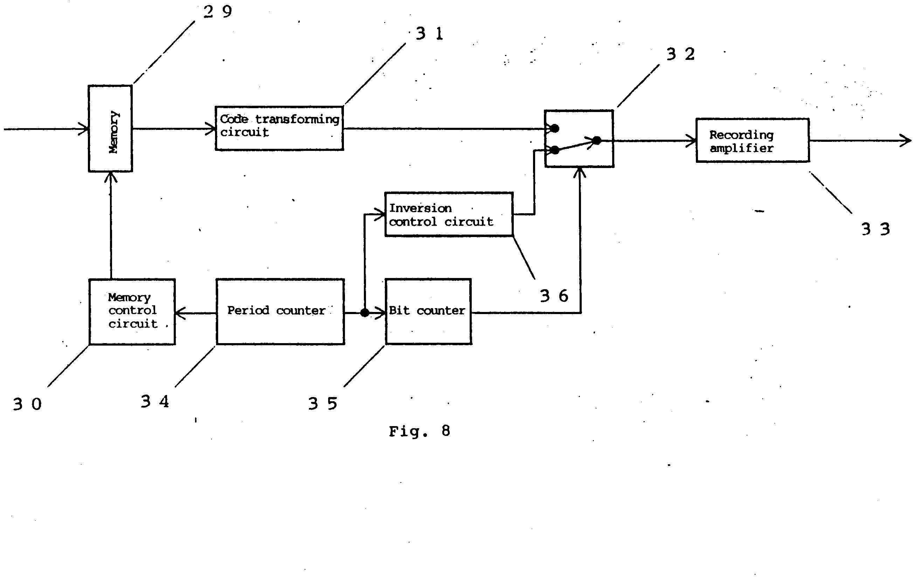

Fig. 8 is a block diagram of this embodiment. First, the data to be recorded are temporarily into a memory 29. A memory control circuit 30 generally controls the memory 29 to successively readout the stored data thereinto. The data thus readout from the memory 29 are sent to a code transforming circuit 31, in which the code transformation for recording is carried out using, for example, the method shown Embodiment 1 of this invention. The recording system thus subjected to the code transformation is sent generally through a switch 32 to a recording amplifier 33.

On the other hand, in case of inserting a pilot pattern, in response to the control signal from a period counter 34, the memory control circuit 30 temporarily interrupts to readout the data from the memory 29. In addition, the control signal from the period counter 34 is sent to a bit counter 35 and a inversion control circuit 36. The bit counter 35 counts only the number of bits to be inserted in response to the signal from the period counter 34 and outputs a switching signal to the switch 32 only during counting.

The inversion control circuit 36 switches the bit pattern to be inserted to 1 and 0 by the control signal from the period counter 34 and outputs. For example, 11 and 00 are inserted alternately and periodically, which is outputted, through the switch 32 serving to act switching only during counting, the number of bits to be inserted to the recording amplifier 33. After completion of insertion, the data from the memory 29 are subjected to code-transformation again to be recorded.

For example, in case that 11 and 00 are to be inserted into the 8/12 code explained in Embodiment 1, although different in code word length, 11 and 00 can be processed in the entirely same manner as in processing a normal code word of F = 1 and E = 1. As a result, 11 and 00 can be easily inserted by the method similar to that of inserting synchronous pattern shown in Embodiment 1.

Also, although the code word length of a code word to be inserted for the pilot use is different from that of a normal code word, the parallel / serial converter 10 is controlled according to the code word length, and the code word length only for the code word to be inserted for the pilot use is processed as 2 bits, thus the inserting process being able to be easily performed.

In addition, if the code word for the pilot use is set to be inserted into a specific position in a block, after detection of the synchronous pattern when reproducing, this code word for the pilot use can be easily removed. The block thus obtained becomes the state before the code word for the pilot use is inserted. As a result, for example, the decoding circuit having a redundancy reduced as explained in Embodiment 1 can be directly applied. As described the method of this invention makes it possible to generate a pilot which is capable of completely solving the conventional problems with an extremely simple circuit structure.

**Claims**

1. A digital signal recording method wherein in case of inserting a synchronous pattern showing a head of a recording block comprising a plurality of information signals, said synchronous pattern is selected in accordance with said plurality of information signals.

2. A digital signal recording method as claimed in claim 1, wherein said recording block is obtained by transforming a data word of 8 bits into a code word of 12 bits, where the number of continuous bits of a same binary value in a bit string obtained by mutually connecting code words exceeds 2 and said synchronous pattern is either 111110011111111110011111 or 000001100000000000011111.

3. A digital signal recording method being characterized in that a recording sequence has a binary value 1 continuing 1 bit or more and a binary value 0 continuing 1 bit or more inserted alternately at predetermined intervals.

8

Fig. 1

Fig. 2

| Synchronous pattern | I D | Data |
|---|---|---|

Fig. 3

Code word ( $l$ 2 bits )

| $l$ · · · $l$ | 0 0 · · · · · · · $l$ $l$ | 0 · · · 0 |
|---|---|---|

$L$ block
( $l$ bits )

$B$ block
( $b$ bits )

$R$ block
( $r$ bits )

EP 0 473 412 A1

Fig. 4

| L | B | R | L | B | R |
|---|---|---|---|---|---|

← ——— W 1 ——— → ← ——— W 2 ——— →

Fig. 5

← ——————————— Synchronous pattern ——————————— →

← ——— 12 bits ——— → ← ——— 12 bits ——— →

| $b_0$ | $b_1$ | $b_2$ | | $b_A$ | $b_B$ | $b_0$ | $b_1$ | $b_2$ | | $b_A$ | $b_B$ |
|---|---|---|---|---|---|---|---|---|---|---|---|

← ——— 12 bits ——— →

EP 0 473 412 A1

Fig. 6

| 1 1 1 1 1 0 0 1 1 1 1 1 1 1 1 1 1 1 0 0 1 1 1 1 1 |

19

Data to be sent

| Equivalence detection circuit | → Synchronous pattern detection signal |

→ AV identification signal

| Equivalence detection circuit | → Synchronous pattern detection signal |

→ AV identification signal

| 0 0 0 0 0 1 1 0 0 0 0 0 0 0 0 0 0 1 1 0 0 0 0 0 |

20

EP 0 473 412 A1

Fig. 7

Synchronous pattern
detection signal

Code word extraction circuit                                          22

Code word

EXOR  EXOR  EXOR  EXOR  EXOR  EXOR     EXOR  EXOR  EXOR  EXOR  EXOR  EXOR     23

NOT   NOT   NOT   NOT   NOT   NOT      NOT   NOT   NOT   NOT   NOT   NOT      24

Provisional decoding circuit          Provisional decoding circuit     25

26                          Y

Code inverse transform circuit

27

EXOR  EXOR  EXOR  EXOR  EXOR  EXOR  EXOR  EXOR     28

Data word

Fig. 8

Tape

Track

Track

$T_p$

Fig. 9

Curved track

Reproducing locus of head

Effective track width

Track pitch

Fig. 10

EP 0 473 412 A1

**European Patent Office**

## EUROPEAN SEARCH REPORT

Application Number

| | DOCUMENTS CONSIDERED TO BE RELEVANT | | EP 91307878.8 |
|---|---|---|---|
| Category | Citation of document with indication, where appropriate, of relevant passages | Relevant to claim | CLASSIFICATION OF THE APPLICATION (Int. Cl.5) |
| X | US - A - 4 794 465 (VAN LUYT) * Fig. 2-4; column 7, line 54 - column 8, line 43; claims 1-4 * | 1 | H 04 N 5/92 G 11 B 20/14 |
| Y | | 2 | |
| Y | EP - A1 - 0 351 055 (MATSUSHITA) * Abstract; claim 1 * | 2 | |
| A | GB - A - 2 217 509 (CANON) * Abstract; fig. 3; page 11, lines 18-22; claims 1,6-10 * | 1 | |
| A | EP - A1 - 0 319 101 (PHILIPS) * Page 10, lines 48-53; fig. 23, claims 1-3 * | 1,2,3 | |
| | | | TECHNICAL FIELDS SEARCHED (Int. Cl.5) |
| | | | G 11 B 20/00 H 04 N 5/00 |

| The present search report has been drawn up for all claims | | |
|---|---|---|
| Place of search VIENNA | Date of completion of the search 11-10-1991 | Examiner DIMITROW |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)